# EUROPEAN PATENT APPLICATION

(11) **EP 4 049 545 A1**
(43) Date of publication of application: **31.08.2022**
(21) Application number: 21159133.4
(22) Date of filing: 25.02.2021
(51) Int. Cl.: A23N 7/02, A47J 17/18

(54) **PEELING ROLL ELEMENT PAIR, PROCESSING DEVICE AND METHOD FOR PEELING VEGETABLES**

(71) Applicant: Forsfood Group Oy, 61800 Kauhajoki (FI)
(72) Inventor: JYRÄKOSKI, Antti Johannes, 61300 Kurikka (FI)
(74) Representative: Berggren Oy

(57) **Abstract**

Peeling roll element pair (1) for peeling vegetables (5), wherein each roll element (2, 2') has a rod-like shape and a plurality of cutting blades (4, 4') formed on its outer surface, wherein the cutting blades (4, 4') extend at an angle in relation to the longitudinal center axis (3, 3') of the roll element (2, 2') along at least a portion of the length of the roll element, the adjacent roll elements the angles of the cutting blades on the outer surface of the roll element are arranged opposite in relation to each other, and the adjacent roll elements are configured to be rotated in the same rotational direction. The present invention also relates to a processing device (10) for vegetables and to a method for processing vegetables which utilize this kind of peeling roll element pair (1).

## Description

The present invention relates to peeling vegetables in the processing of vegetables. More precisely the invention relates to peeling roll elements used in the peeling process, and to a processing device and a method for utilizing these kind of peeling roll elements.

Various vegetable preparations are manufactured of vegetables, such as potatoes and carrots. During processing, the vegetables may be peeled, divided, shaped or hollowed, for example. Typically, the various stages of vegetable processing are carried out in separate devices and machines.

In known peeling devices the peeling of the vegetables is typically done with knife peelers. In these devices the vegetable's outer surface is removed typically moving blades.

Publication EP 1 123 663 A1 discloses a peeling element for a peeling machine, wherein the peeling element is formed rod-shaped, first part of the outer surface of the element comprising a rough scraping surface and second part of the outer surface of the element comprising at least one cutting means. In a peeling machine a plurality of these peeling elements is rotated around their longitudinal center axis, and the rough scraping surface cleans the vegetables before the cutting means peel them. This way the cutting means can be protected from abrasive effect of dirt and sand for example without additional cleaning devices or machines.

The present invention provides an improved peeling roll element which is used in pairs, wherein the adjacent roll elements cause the vegetable to be peeled rotate on the pair of roll elements and thus achieve even peeling of the vegetable. This increases the yield, quality, and capacity of the peeling process.

In the peeling roll element pair of the invention for peeling vegetables each roll element has a rod-like shape and a plurality of cutting blades formed on its outer surface, wherein the cutting blades extend at an angle in relation to the longitudinal center axis of the roll element along at least a portion of the length of the roll element, in the adjacent roll elements the angles of the cutting blades on the outer surface of the roll element are arranged opposite in relation to each other, and the adjacent roll elements are configured to be rotated in the same rotational direction.

In an embodiment of the peeling roll element pair of the invention there is a gap arranged between the roll elements. This gap allows the peeled material to be removed from the peeling process. The size of the gap is typically less than 5 mm.

In an embodiment of the peeling roll element pair of the invention the angle of cutting blades in relation to the longitudinal center axis of the roll element is preferably between 5 and 60 degrees.

In an embodiment of the peeling roll element pair of the invention the number of cutting blades on a single peeling roll element is between 1 and the maximum that can be fitted on the outer surface of the roll element.

In an embodiment of the peeling roll element pair of the invention the diameter of the roll elements is between 5 and 16 cm.

In an embodiment of the peeling roll element pair of the invention the cutting blades extend along substantially the whole length of the roll element.

In an embodiment of the peeling roll element pair of the invention the angle of the cutting blades is different in the roll elements of the pair.

The present invention also provides a processing device for vegetables, which comprises at least one peeling roll element pair of the invention, and a device for rotating the roll elements at the same rotational direction.

Further, the present invention also provides a method for processing vegetables, wherein the vegetables are placed on a plurality of longitudinal roll elements having a plurality of cutting blades formed on their outer surface for peeling the vegetables, and the vegetables are set into rotating motion on a peeling roll element pair of the invention during the peeling process.

More precisely the features defining a peeling roll element pair in accordance with the present invention are presented in claim 1, the features defining a processing device of the invention are more precisely presented in claim 8, and the features defining a method of the invention are more precisely presented in claim 9. Dependent claims present advantageous features and embodiments of the invention.

Exemplifying embodiment of the invention and its advantages are explained in greater detail below in the sense of example and with reference to accompanying drawings, where
Figure 1 shows schematically an embodiment of a peeling roll element pair of the invention, and
Figure 2 shows schematically an embodiment of a peeling device utilizing the peeling roll element pairs of the present invention.

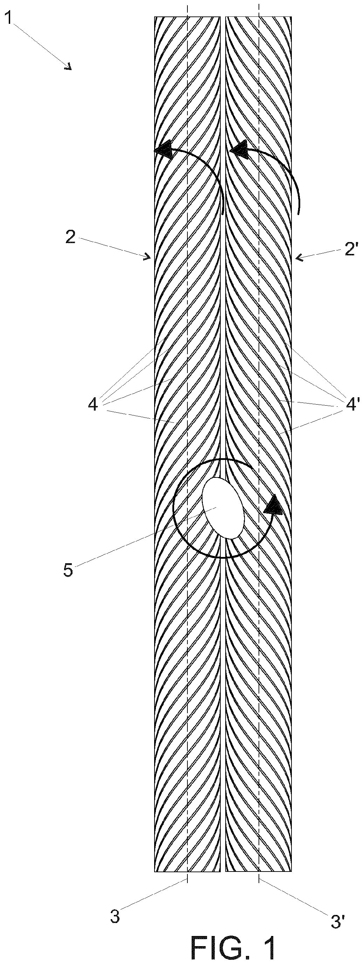

Figure 1 shows schematically a peeling roll element pair 1 in accordance with the present invention.

The peeling roll element pair 1 comprises two rod-like peeling roll elements 2, 2', which are rotated on the same rotational direction around their longitudinal center axis 3, 3'. The peeling roll elements 2, 2' are arranged in parallel and adjacent to each other so, that there is a gap between the elements, which allows the material removed from the vegetable 5 during peeling operation to drop out. The size of the gap is typically under 5 mm.

The peeling roll elements 2, 2' are equipped with a plurality of cutting blades 4, 4', on the outer surface of the roll elements, which cutting blades is this embodiment extend as continuous protrusions helically around the roll elements and along the length of the roll elements.

In the embodiment of figure 1 the angle of the cutting blades 4, 4' on the outer surfaces of the peeling roll elements 2, 2' in relation to the longitudinal center axis 3, 3' of the elements is substantially equal, but opposite in the elements. This way the same directional rotating movement of the peeling roll elements 2, 2' causes the vegetable 5 to start rotating on the peeling roll element pair 1 while it is being peeled.

In relation to the embodiment shown in figure 1 it is to be noted, that the amount of cutting blades 4, 4' on a single roll may vary in the present invention. The amount may vary from 1 to the maximum number that can be fitted on a roll element 2, 2'. Further, the angle of the cutting blades 4, 4' in relation to the longitudinal central axis 3, 3' of the roll elements 2, 2' may vary between 5 and 60 degrees, and the angle can be different in roll element 2 than in roll element 2', for example.

It is also to be noted, that in the present invention the cutting blades 4, 4' may extend throughout the length of the outer surface of the roll elements 2, 2', or only a portion of the outer surface of the roll elements.

The peeling roll elements 2, 2' can be made from any material suitable for handling comestibles. Examples include suitable metals and plastics. Further, the diameter of the roll elements 2, 2' may typically vary between 5 and 16 cm.

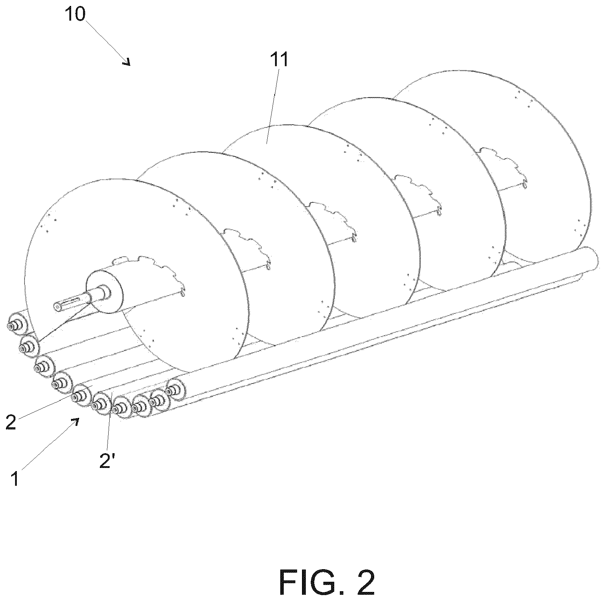

Figure 2 shows schematically an embodiment of a peeling device 10 utilizing the peeling roll element pairs 1 of the present invention. The peeling device 10 is shown without frame structure to illustrate the operational parts of the device.

The peeling device 10 comprises a plurality, five in this embodiment, of peeling roll element pairs 1 arranged along an edge of a screw conveyer 11. When the device 10 is operated, the vegetables to be peeled are brought to one end area of the peeling roll element parts 1. The screw conveyer 11 moves the vegetables on the peeling roll element pairs 1 whereby the rotating peeling roll elements 2, 2' peel the vegetables during their movement from one end area to another end area of the device, from where the peeled vegetables are forwarded to other processing devices.

In the peeling device 10 the peeling roll elements 2, 2' are typically rotated with a rotational speed of 2500 rpm, or lower, with suitable known motors and transmission devices, for example.

The specific exemplifying embodiment of the invention shown in figures and discussed above should not be construed as limiting. A person skilled in the art can amend and modify the embodiment described in many evident ways within the scope of the attached claims. Thus, the invention is not limited merely to the embodiment described above.

## Claims

1. Peeling roll element pair (1) for peeling vegetables (5), wherein each roll element (2, 2') has a rod-like shape and a plurality of cutting blades (4, 4') formed on its outer surface, **characterized in that** the cutting blades (4, 4') extend at an angle in relation to the longitudinal center axis (3, 3') of the roll element (2, 2') along at least a portion of the length of the roll element, that in the adjacent roll elements the angles of the cutting blades on the outer surface of the roll element are arranged opposite in relation to each other, and that the adjacent roll elements are configured to be rotated in the same rotational direction.

2. Peeling roll element pair (1) of claim 1, wherein there is a gap arranged between the roll elements (2, 2').

3. Peeling roll element pair (1) of claims 1 or 2, wherein the angle of cutting blades (4, 4') in relation to the longitudinal center axis (3, 3') of the roll element (2, 2') is between 5 and 60 degrees.

4. Peeling roll element pair (1) of any of claims 1-3, wherein the number of cutting blades (4, 4') on a single peeling roll element (2, 2') is between 1 and the maximum that can be fitted on the outer surface of the roll element.

5. Peeling roll element pair (1) of any of the claims 1-4, wherein the diameter of the roll elements (2, 2') is between 5 and 16 cm.

6. Peeling roll element pair (1) of any of claims 1-5, wherein the cutting blades (4, 4') extend along substantially the whole length of the roll element (2, 2').

7. Peeling roll element pair (1) of any of claims 1-6, wherein the angle of the cutting blades (4, 4') is different in the roll elements (2, 2') of the pair (1).

8. Processing device (10) for vegetables (5), **characterized in that** the device comprises at least one peeling roll element pair (1) of the preceding claims, and a device for rotating the roll elements at the same rotational direction.

9. Method for processing vegetables (5), wherein the vegetables are placed on a plurality of longitudinal roll elements (2, 2') having a plurality of cutting blades (4, 4') formed on their outer surface for peeling the vegetables, **characterized in that** the vegetables (5) are set into rotating motion on a peeling roll element pair (1) of any of claims 1-7 during the peeling process.
